# EUROPEAN PATENT SPECIFICATION

(11) **EP 3 725 145 B1**
(45) Date of publication and mention of the grant of the patent: **03.08.2022**
(21) Application number: 20159772.1
(22) Date of filing: 27.02.2020
(51) Int. Cl.: A01D 34/00, B60B 11/02, B60C 27/20

(54) **A MOVEMENT DEVICE FOR SELF-PROPELLED LAWN MOWER ROBOTS**
EIN BEWEGUNGSGERÄT FÜR SELBSTGETRIEBENE RASENMÄHERROBOTER
UN DISPOSITIF DE MOUVEMENT POUR LES ROBOTS AUTOPORTANTS DE TONDEUSE À GAZON

(30) Priority: 18.04.2019 IT 201900006036
(43) Date of publication of application: 21.10.2020
(73) Proprietor: Bernini, Fabrizio, 52021 Bucine - Arezzo (IT)
(72) Inventor: Bernini, Fabrizio, 52021 Bucine - Arezzo (IT)
(74) Representative: Fabbriciani, Simone

(56) References cited:
- EP-A1- 2 241 172
- WO-A1-2006/129156
- US-A- 3 953 075
- US-A- 6 022 082
- US-A1- 2016 297 237

## Description

This invention relates to the technical sector of automatic gardening devices.

In particular, the invention relates to an autonomous lawn mower robot with particular attention to the means and the devices which allow the movement of the robot inside a work area.

The lawn mower devices are normally used to keep lawns, gardens and grassy areas in general in optimum conditions, that is to say, for keeping the grass below a certain height in a substantially homogeneous manner over the entire cutting area.

There are prior art self-propelled lawn mower robots which are moved by wheels, which are connected to a suitable motor designed to rotate them, promoting in this way a movement of the robot.

However, the Applicant has observed that the movement devices of known type have drawbacks, which adversely affect the correct movement of the robot and consequently reduce, even significantly, the efficiency in the performance of the operations for maintenance of the turf.

In particular, the prior art devices adapt poorly to operating inside work areas which have surfaces with portions having different features.

In the same way, the prior art devices adapt poorly to operating inside work areas which have surfaces with features which vary during the year, in particular as a function of the atmospheric conditions.

In this context, features which could have substantial differences at different points of the cutting area or at different moments in time which modify significantly the operating conditions of the robot are: height of the grass, type of ground (more or less sandy, muddy or other), presence of small obstacles such as stones above which the wheels are must transit, degree of up/down gradient.

In fact, a wheel which is particularly efficient if it is designed to operate in the presence of a particular combination of environmental characteristics, could, on the other hand, be considerably disadvantageous with the changing of these features.

In fact, a wheel having a reduced surface for contact with the ground, that is to say, with small dimensions relative to the overall size of the robot, requires a limited power to be rotated and therefore allows the robot to operate continuously for a longer period of time, but it does not allow the correct movement on slippery or muddy ground or with high gradients due to the limited traction capacity.

On the other hand, a wheel with large dimensions provides a greater contact surface and therefore guarantees a better traction which allows the correct movement of the robot inside the working area, irrespective of the conditions of the ground, at the cost of greater consumption which causes a greater number of interruptions of the cutting operations and a greater wear of the motor of the robot.

Similar devices are those described in the patent application WO 2006/129156 A1.

However, the movement devices described in these prior art documents require more powerful traction and an improved grip.

In this context, the technical purpose which forms the basis of the invention is to provide a movement device for a lawn mower robot which overcomes at least some of the above-mentioned drawbacks of the prior art.

In particular, the aim of this invention is to provide a movement device for a self-propelled lawn mower robot which is able to operate efficiently irrespective of any differences or variations in the features of the work area in which the robot must operate.

The technical purpose indicated and the aims specified are substantially achieved by a movement device for a lawn mower robot comprising the technical features described in one or more of the appended claims.

The invention describes a movement device for a self-propelled lawn mower robot which comprises a main wheel which can be coupled to a power pick-up of a motor; at least one auxiliary wheel which can be coupled to the main wheel for receiving from it a mechanical power and coupling means configured for stably constraining the at least one auxiliary wheel to the main wheel, in such a way that the auxiliary wheel is rotationally integral with the main wheel.

Advantageously, the device according to the invention makes it possible to modify the traction force and the adherence to the ground of the wheels, allowing a variable number of auxiliary wheels to be applied to the main wheel.

In this way it is possible to increase or decrease the contact surface of the movement device with the ground, thus selecting the number of auxiliary wheels to be applied to the main wheel as a function of the particular ambient features in which the robot is to operate.

The invention also relates to a self-propelled lawn mower robot which comprises a frame, movement means and cutting means.

The movement means are associated with the frame for guiding it along a feed trajectory, the cutting means are also associated with the frame and are also configured for cutting a turf present along the feed trajectory. Moreover, the movement means comprise a motor and a cutting device according to the invention, wherein at least the main wheel is coupled to a power pick-up of the motor.

Advantageously, the robot is designed to be fitted, using its movement means, a variable number of wheels in such a way as to exactly follow the surface of contact with the ground, thereby improving the traction if necessary.

The invention also relates to a kit for the preparation of movement means of a self-propelled lawn mower robot.

The kit comprises a plurality of auxiliary wheels which can be coupled to a main wheel of the movement means of a self-propelled lawn mower robot. The kit also comprises coupling means configured to stably constrain at least one auxiliary wheel to the main wheel or to a further auxiliary wheel, in such a way that the at least one auxiliary wheel is rotationally integral, respectively, with the main wheel or the further auxiliary wheel.

In particular, the auxiliary wheels and the coupling means included in the kit may have all the features identified and associated respectively with the auxiliary wheels and with the coupling means according to the invention, respectively.

Advantageously, the kit according to the invention allows a self-propelled lawn mower robot to be quickly adapted introducing one or more auxiliary wheels which assist the main wheels in promoting a correct movement of the robot on grounds of all the types.

The dependent claims, incorporated herein for reference, relate to different embodiments of the invention.

Further features and advantages of the invention are more apparent in the non-limiting description which follows of a preferred non-limiting embodiment of a movement device for self-propelled lawn mower robots illustrated in the accompanying drawings, in which:
- Figure 1 shows a possible embodiment of a movement device for self-propelled lawn mower robots according to the invention;
- Figure 2 shows an exploded view of the device illustrated in Figure 1;

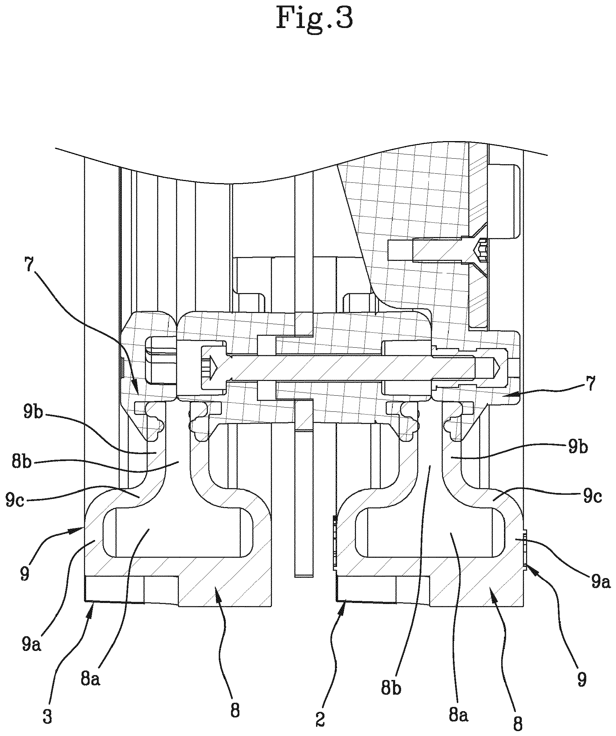

- Figure 3 shows a radial cross-section of a detail of a wheel for a movement device.

In the accompanying drawings, the numeral 1 denotes in general a movement device for a self-propelled lawn mower robot, referred to below as device 1.

The expression "self-propelled lawn mower robot" means a robot movable in a substantially autonomous manner inside a work area to perform an operation for cutting turf present inside the area, in particular following a predetermined feed trajectory.

In particular, the device 1 described here is configured to promote the correct movement of the robot inside the cutting area, in such a way as to allow it to perform an operation for cutting the turf on the entire surface inside of which it is designed to operate.

The device 1 mainly comprises a main wheel 2 and at least one auxiliary wheel 3.

The main wheel 2 can be directly coupled to a power pick-up of a motor, by the action of which it is rotated determining the movement of the robot inside the work area.

By way of example, the motor may be of the electric type, powered by a battery; the latter may be of the rechargeable type.

Preferably, the recharging of the robot, which occurs at a fixed station or recharging base, is achieved by electrical coupling, in particular of the inductive type.

Preferably, the battery may also power other electrical/electronic devices provided on the lawn mower robot such as means for executing the cutting operation.

The at least one auxiliary wheel 3 can, on the other hand, be coupled to the main wheel 2 for receiving from it a mechanical power.

For this reason, the main wheel 2 may be connected directly, for example by means of a transmission shaft or a similar system, with a power pick-up of the motor of the robot in such a way as to be rotated by the latter, whilst the at least one auxiliary wheel 3 is configured to be fixed integrally to the main wheel 2 to be rotated together with it when it is rotated by the motor. In other words, the at least one auxiliary wheel 3 is not connected directly to the power pick-up of the motor, but solely by means of the main wheel 2, which therefore acts as a unit for transmitting motion from the power pick-up to the at least one auxiliary wheel 3.

Advantageously, it is possible to couple to the main wheel 2 a plurality of auxiliary wheels 3, in this way increasing the overall surface of contact with the ground of the device 1.

In this way it is possible to modify the adherence and traction properties of the robot depending on the particular operating conditions of the work area inside of which it must be moved.

For example, in the presence of muddy or wet ground, in which it is necessary to have a greater traction, it is possible to apply a plurality of auxiliary wheels 3 to the main wheel 2, increasing the surface for contact with the ground until eliminating the risk of sliding of the wheels 2, 3. Again by way of an example, in the presence, on the other hand, of more stable ground, in which a smaller surface of adhesion with the ground is sufficient to guarantee the correct movement of the robot, it is possible to reduce the number of auxiliary wheels 3 applied, until also leaving solely applied the main wheel 2, reducing in this way the power required from the motor to rotate them.

In this way it is possible to adapt the robot to the conditions of the ground in which it is to operate, if these change locally or over time, simply by varying the number of auxiliary wheels 3b applied, modulating in this way the dimension of the surface of contact with the ground of the device 1. The device 1 also comprises coupling means 4 configured for securely fixing the at least one auxiliary wheel 3 to the main wheel 2.

In particular, the coupling means 4 allow the wheels 2, 3 to be fixed to each other in such a way that the at least one auxiliary wheel 3 is rotationally integral with the main wheel 2.

In this way, only the main wheel 2 must be connected to the power pick-up of the motor, whilst the auxiliary wheels 3 can all be connected solely to the main wheel 2, either directly or by means of further auxiliary wheels 3, to be rotated together with it.

In this way, it is possible to apply a variable number of auxiliary wheels 3 since irrespective of the number of auxiliary wheels 3 applied it is not necessary to modify the characteristics of the power pick-up of the motor since the latter always remains connected directly to the main wheel 2 and need not be modified to fit the auxiliary wheels 3.

Preferably, the coupling means 4 are applied at a peripheral portion of the at least one auxiliary wheel 3 and of the main wheel 2.

In this way, it is possible to couple the main wheel 3 to the motor by means of a transmission shaft, coaxial with the axis of rotation "X" of the wheels 2, 3, avoiding the risk of interference with the coupling means 4.

According to a particular embodiment, both the main wheel 2 and each auxiliary wheel 3 have a plurality of through seats threaded internally and positioned in such a way that each through seat of the main wheel 2 can face a respective through seat of the auxiliary wheel 3.

In this context, the coupling means 4 comprise a plurality of screws which can be screwed inside the through seats.

In particular, each auxiliary wheel 3 may have a first plurality of through seats, to be constrained to the main wheel 2 by the coupling means 4 (or to an auxiliary wheel 3 already applied to the main wheel 2), and a second plurality of through seats to allow it to be constrained to a further auxiliary wheel 3.

Alternatively, each auxiliary wheel 3 and the main wheel 2 have only a plurality of through seats in which screws of different length can be inserted depending on the number of auxiliary wheels 3 which are applied to the main wheel 2.

Preferably, the through seats are positioned radially and equidistant from each other about the axis of rotation "X" of the wheels 2, 3.

The device also comprises a protective element 5 applicable to an auxiliary wheel 3 or to the main wheel 2.

In particular, the protective element 5 may be applied to the outermost wheel 2, 3, that is, the one furthest from the motor, in a relative lateral surface, that is to say, a surface perpendicular to its axis of rotation "X", directly facing the working area.

More specifically, the protective element 5 is configured to cover at least those portions of the lateral surface of the wheels 2, 3 in which the connecting means 4 are applied or applicable.

If, for example, two auxiliary wheels 3 are applied to the main wheel 2, the protective element will be applied to the auxiliary wheel 3 furthest from the main wheel 2 and on a relative lateral surface directly facing the working area.

According to a particular embodiment, the device 1 comprises at least one drive wheel 6 configured to further improve the traction which can be obtained from the device 1.

In particular, the drive wheel 6 comprises a main body 6a, which has a substantially circular shape and a plurality of drive fingers 6b.

In particular, the drive fingers 6b extend radially away from the main body 6a and in such a way as to be configured to engage the ground on which the drive wheel 6 slides.

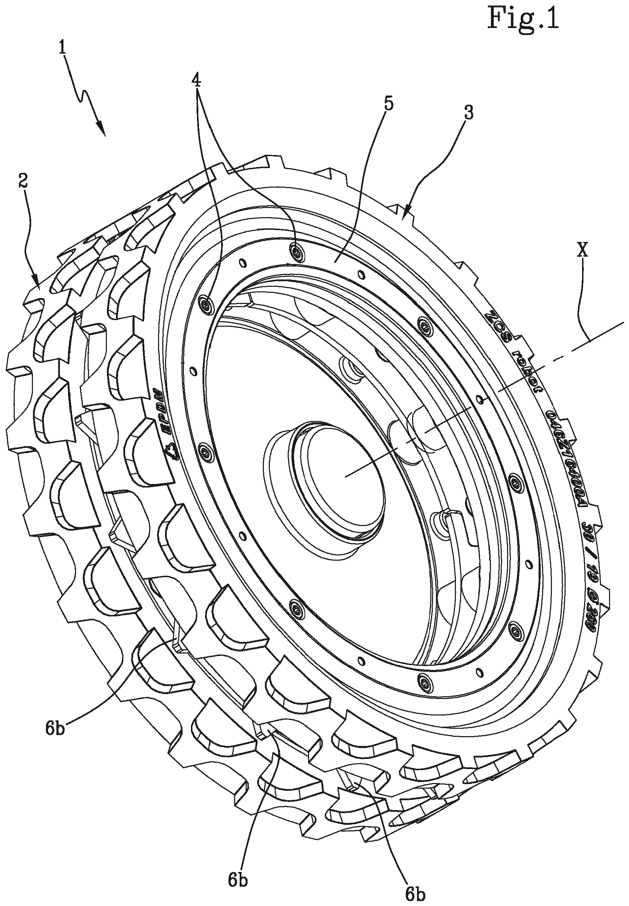

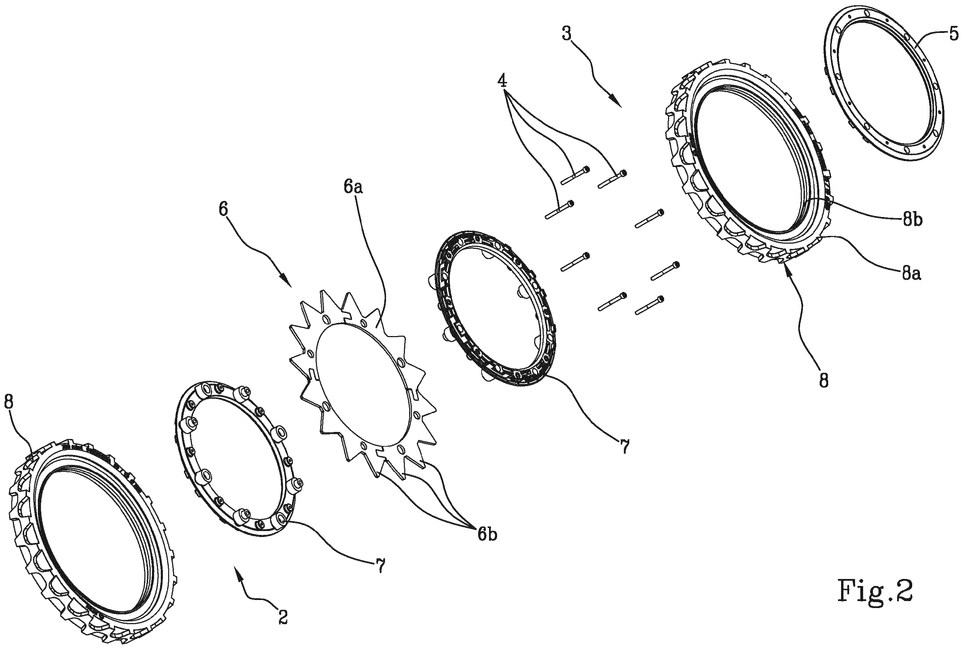

As may be seen in the accompanying drawings, Figures 1 and 2 in particular, the drive fingers 6b are positioned circumferentially and equidistant from each other around the main body 6a in such a way as to guarantee a homogeneous and constant improvement of the traction which can be obtained by means of the device 1.

Preferably, the at least one drive wheel 6 is configured to be interposed between the main wheel 2 and an auxiliary wheel 3 adjacent to it or between adjacent auxiliary wheels 3.

In other words, the drive wheel is particularly suitable for being interposed between adjacent wheels 2, 3, but without excluding that it can be applied to the main wheel 2 even if no auxiliary wheel 3 is actually applied. Similarly, it is possible to apply a plurality of drive wheels 6 between each pair of adjacent wheels 2, 3, further applying a drive wheel also outside the last auxiliary wheel 3, that is to say, in such a way that the drive wheel 6 is directly facing the outside environment.

According to one particular aspect of the invention, the main wheel 2 and each auxiliary wheel 3 comprise a rim 7 and a tyre 8, the latter preferably being made of rubber.

Each tyre in turn comprises an outer annular portion 8a and an inner annular portion 8b.

The outer annular portion 8a defines the tread of the tyre, that is, it is configured to engage with the ground which defines the sliding plane on which the device 1 operates.

Moreover, the outer annular portion 8a has a cross-section, in a radial plane, extending mainly along a direction substantially parallel to the axis of rotation "X" of the tyre 8.

The inner annular portion 8b is, on the other hand, configured for coupling the tyre 8 to the rim 7.

The inner annular portion 8b is positioned at a mid-plane "M" of the outer annular portion 8a and has a cross-section, in a radial plane, which extends mainly along a direction substantially perpendicular to the axis of rotation "X" of the tyre 8.

In other words, the tyre has a substantially T-shaped radial cross-section, wherein the horizontal arms are defined by the outer annular portion 8a, which has the tread designed to engage the ground and the central rod is defined by the inner annular portion 8b which constrains the tyre 8 to the rim 7.

More in detail, the tyre 8 has a pair of shoulders 9, each of which is substantially S-shaped defined by a first portion 9a, a second portion 9b and a third portion 9c.

The first portion 9a extends in a substantially perpendicular manner relative to the axis of rotation "X" of the tyre 8 and delimits laterally the outer annular portion 8a.

The second portion 9b extends in a substantially perpendicular manner relative to the axis of rotation "X" of the tyre 8 and delimits laterally the inner annular portion 8b.

The third portion 9c, on the other hand, extends in a substantially parallel manner to the axis of rotation "X" of the tyre 8 and acts as a connector between the first portion 9a and the second portion 9b, forming also partly a wall of the outer annular portion 8a, in particular a wall facing the rim 7. Advantageously, the distance between the second portions 9b of the pair of shoulders 9 is less than 30% of the distance between the first portions 9a of the same pair of shoulders 9.

It follows that the width of the outer annular portion 8a is significantly greater than the width adopted by the tyre 8 at the inner annular portion 8b.

In this way, a shoulder 9 is obtained in its entirety which is extremely soft, allowing a significant deformation of the outer annular portion 8a.

In this way, the tyre tread can easily be deformed in such a way as to adapt to the profile of the surface on which the device 1 slides and keep contact with that surface at all times.

Depending on the technical specifications of the robot to which the device 1 will be applied it is also possible that the tyre 8 is pressurised, preferably at a pressure at least equal to an atmospheric pressure.

Moreover, the particular shape of the tyre means that during use the portion of tyre 8 in contact with the ground deforms to adapt to the profile of the surface on which it is sliding, and then returns elastically to its original shape once it loses contact with the ground, in particular following a gradual rotation of the wheel 2 to which it is applied.

The passage from the deformed shape to the original one generates a pulse which allows detachment of any residue, muddy in particular, or detritus, for example small stones or branches, which may remain attached to that particular portion of tyre 8 when the robot on which it is mounted has passed above it.

In this way it is possible to guarantee that the tyre remains clean, thus preventing the accumulation of dirt which could reduce the gripping capacity on the ground.

Advantageously, the movement device 1 according to the invention makes it possible to overcome the drawbacks present in the prior art, making it possible to optimise the efficiency of the self-propelled lawn mower robot to which it is applied, allowing it to be best adapted to operate as a function of the specific ambient characteristics of the work area.

This result is obtained by introducing a main wheel 2 configured to be easily and quickly coupled to a variable number of suitably selected auxiliary wheels 3.

The invention also relates to a self-propelled lawn mower robot.

The robot comprises a frame, movement means and cutting means.

The frame is made, for example, of a semi-rigid material, preferably plastic, and is shaped to support the various components which form part of the robot.

The movement means are mounted on the frame, in such a way as to move the robot inside the working area, in particular along the feed trajectory.

In particular, the movement means comprise a motor, for example of the electric type as already indicated, and a pair of movement devices 1 according to the invention, wherein at least the respective main wheels 2 are coupled and operatively connected with a power pick-up of the motor or with respective power pick-ups of the motor.

The cutting means are also associated with the frame and configured for performing a cutting operation of turf present along the feed trajectory.

In particular, the cutting means may comprise one or more cutting blades which can be rotated, for example by means of a further power pick-up of the same motor which activates the movement device 1.

Advantageously, the robot according to the invention is particularly efficient in operating in a wide variety of situations, since its movement means can be easily and quickly adapted to adapt to the specific conditions of the ground on which the robot must perform the cutting operation.

The invention also relates to a kit for the preparation of movement means of a self-propelled lawn mower robot.

The kit comprises a plurality of auxiliary wheels 3 and coupling means 4. Each auxiliary wheel can be coupled to a main wheel 2 of the movement means of a self-propelled lawn mower robot, allowing in this way modification of the surface useful to engage the ground along the feed trajectory.

The coupling means 4 are configured for securely fixing at least one auxiliary wheel 3 to said main wheel 2, in such a way that the at least one auxiliary wheel 3 is rotationally integral with the main wheel 2.

In this way it is possible to transmit the motion also to the auxiliary wheel 3 without having to modify the structure of the power pick-up of the motor of the robot.

Advantageously, the kit according to the invention is applicable to a prior art self-propelled lawn mower robot simply constraining a predetermined number of auxiliary wheels 3 to the main wheel 2 of the robot by means of the coupling means 4.

In this way it is possible to prepare the robots to operate in the best way even on different ground.

## Claims

1. A movement device (1) for self-propelled lawn mower robots comprising:
- a main wheel (2) which can be coupled to a power pick-up of a motor;
- at least one auxiliary wheel (3) which can be coupled to the main wheel (2) to receive from said main wheel (2) a mechanical power;
- coupling means (4) configured for securely fixing the at least one auxiliary wheel (3) to said main wheel (2), in such a way that the at least one auxiliary wheel (3) is rotationally integral with the main wheel (2); comprising at least one drive wheel (6), having a main body (6a) substantially circular and a plurality of drive fingers (6b) extending radially away from said main body (6a),
**characterized in that** it comprises
a protective element (5) which can be coupled to a lateral surface of an auxiliary wheel (3) or of the main wheel (2) facing directly toward a working area of the lawn mower robot, in such a way as to cover at least partly said surface.

2. The device according to claim 1, wherein the coupling means (4) are applicable at a peripheral portion of the at least one auxiliary wheel (3) and of the at least one main wheel (2).

3. The device according to claim 1 or 2, wherein the main wheel (2) and the auxiliary wheel (3) have a plurality of through seats threaded internally and positioned in such a way that each through seat of the main wheel (2) can face a respective through seat of the auxiliary wheel (3), preferably said coupling means (4) comprise a plurality of screws which can be screwed in said through seats.

4. The device according to any one of the preceding claims, wherein the at least one drive wheel (6) is configured to be interposed between the main wheel (2) and an auxiliary wheel (3) adjacent to said main wheel (2) or between adjacent auxiliary wheels (3).

5. The device according to any one of the preceding claims, wherein said drive fingers (6b) are arranged circumferentially and equidistant from each other about the main body (6a).

6. The device according to any one of the preceding claims, wherein the main wheel (2) and each auxiliary wheel (3) comprise a rim (7) and a tyre (8), said tyre (8) comprising:
- an outer annular portion (8a) defining a tyre tread (8) and having a section in a radial plane extending mainly along a direction substantially parallel to an axis of rotation (X) of the tyre (8);
- an inner annular portion (8b) configured to couple the tyre (8) to the rim (7) and positioned at a mid-plane of the outer annular portion (8a), said annular inner portion (8b) having a cross section in a radial plane extending mainly along a direction substantially perpendicular to said axis of rotation (X) of the tyre (8).

7. The device according to claim 6, wherein the tyre (8) has a pair of shoulders (9), each of said shoulders (9) having a cross section substantially in the shape of an 'S', said cross section comprising:
- a first portion (9a) substantially perpendicular to the axis of rotation (X) of the tyre (8) and designed to laterally delimit the outer annular portion (8a);
- a second portion (9b) substantially perpendicular to the axis of rotation (X) of the tyre (8) and designed to laterally delimit the inner annular portion (8b);
- a third portion (9c) substantially parallel to the axis of rotation (X) of the tyre (8) and designed to join the first portion (9a) with the second portion (9b).

8. The device according to claim 7, wherein the distance between the second portions of the pair of shoulders (9) is less than 30% of the distance between the first portions of the pair of shoulders (9).

9. The device according to any one of claims 6 to 8, wherein each tyre (8) is made from rubber.

10. The device according to any one of claims 6 to 9, wherein each tyre (8) is pressurised, preferably at a pressure at least equal to an atmospheric pressure.

11. A self-propelled lawn mower robot comprising:
- a frame;
- movement means associated with the frame for guiding it along a feed trajectory in a working area;
- cutting means associated with the frame and configured for performing a cutting operation of turf present along the feed trajectory;
wherein said movement means comprise a motor and a pair of devices (1) according to any one of the preceding claims, wherein at least the main respective wheels (2) are coupled to a power pick-up of the motor.

12. A kit for the preparation of movement means of a self-propelled lawn mower robot comprising:
- a plurality of auxiliary wheels (3) which can be coupled to a main wheel (2) of the movement means of a self-propelled lawn mower robot according to claim 11;
- coupling means (4) configured for securely fixing at least one auxiliary wheel (3) to said main wheel (2), in such a way that the at least one auxiliary wheel (3) is rotationally integral with the main wheel (2); **characterised in that** said auxiliary wheels (3) and said coupling means (4) comprise one or more of the technical features according to claims 1 to 10.

## Patentansprüche

1. Bewegungsgerät (1) für selbstfahrende Rasenmäherroboter, umfassend:
- ein Hauptrad (2), das an einen Kraftaufnehmer eines Motors gekoppelt werden kann;
- mindestens ein Hilfsrad (3), das mit dem Hauptrad (2) gekoppelt werden kann, um vom Hauptrad (2) eine mechanische Leistung zu empfangen;
- Kopplungsmittel (4), die zum sicheren Befestigen des mindestens einen Hilfsrads (3) am Hauptrad (2) so ausgelegt sind, dass das mindestens eine Hilfsrad (3) drehfest mit dem Hauptrad (2) verbunden ist;
umfassend mindestens ein Antriebsrad (6), das einen im Wesentlichen kreisförmigen Hauptkörper (6a) und eine Vielzahl an Antriebsfingern (6b) aufweist, die sich radial vom Hauptkörper (6a) wegführend erstrecken, **dadurch gekennzeichnet, dass** es ein Schutzelement (5) aufweist, das mit einer Seitenfläche eines Hilfsrades (3) oder des Hauptrades (2), die direkt einem Arbeitsbereich des Rasenmäherroboters zugewandt ist, koppelbar ist, sodass die Fläche mindestens teilweise bedeckt wird.

2. Gerät nach Anspruch 1, wobei die Kopplungsmittel (4) an einem Umfangsabschnitt des mindestens einen Hilfsrades (3) und des mindestens einen Hauptrades (2) anbringbar sind.

3. Gerät nach Anspruch 1 oder 2, wobei das Hauptrad (2) und das Hilfsrad (3) eine Vielzahl an Durchgangsaufnahmen aufweisen, die innen mit einem Gewinde versehen und so positioniert sind, dass eine jede Durchgangsaufnahme des Hauptrades (2) einer jeweiligen Durchgangsaufnahme des Hilfsrades (3) zugewandt sein kann, wobei vorzugsweise die Kopplungsmittel (4) eine Vielzahl an Schrauben aufweisen, die in die Durchgangsaufnahmen eingeschraubt werden können.

4. Gerät nach einem der vorhergehenden Ansprüche, wobei das mindestens eine Antriebsrad (6) so ausgelegt ist, dass es zwischen dem Hauptrad (2) und einem Hilfsrad (3) benachbart zum Hauptrad (2) oder zwischen benachbarten Hilfsrädern (3) angeordnet ist.

5. Gerät nach einem der vorhergehenden Ansprüche, wobei die Antriebsfinger (6b) in Umfangsrichtung und in gleichen Abständen voneinander um den Hauptkörper (6a) herum angeordnet sind.

6. Gerät nach einem der vorhergehenden Ansprüche, wobei das Hauptrad (2) und ein jedes Hilfsrad (3) eine Felge (7) und einen Reifen (8) umfassen, wobei der Reifen (8) Folgendes umfasst:
- einen äußeren ringförmigen Abschnitt (8a), der eine Reifenlauffläche (8) definiert und einen Abschnitt in einer radialen Ebene aufweist, der sich hauptsächlich entlang einer Richtung im Wesentlichen parallel zu einer Drehachse (X) des Reifens (8) erstreckt;
- einen inneren ringförmigen Abschnitt (8b), der ausgelegt ist, um den Reifen (8) mit der Felge (7) zu koppeln, und an einer Mittelebene des äußeren ringförmigen Abschnitts (8a) positioniert ist, wobei der ringförmige innere Abschnitt (8b) einen Querschnitt in einer radialen Ebene aufweist, die sich hauptsächlich entlang einer Richtung erstreckt, die im Wesentlichen senkrecht zur Drehachse (X) des Reifens (8) ist.

7. Gerät nach Anspruch 6, wobei der Reifen (8) ein Paar Schultern (9) aufweist, wobei eine jede der Schultern (9) einen Querschnitt im Wesentlichen in der Form eines "S" aufweist, wobei der Querschnitt Folgendes umfasst:
- einen ersten Abschnitt (9a), der im Wesentlichen senkrecht zur Drehachse (X) des Reifens (8) verläuft und dazu ausgebildet ist, den äußeren ringförmigen Abschnitt (8a) seitlich zu begrenzen;
- einen zweiten Abschnitt (9b), der im Wesentlichen senkrecht zur Drehachse (X) des Reifens (8) ist und dazu ausgebildet ist, den inneren ringförmigen Abschnitt (8b) seitlich zu begrenzen;
- einen dritten Abschnitt (9c), der im Wesentlichen parallel zur Drehachse (X) des Reifens (8) verläuft und dazu ausgebildet ist, den ersten Abschnitt (9a) mit dem zweiten Abschnitt (9b) zu verbinden.

8. Gerät nach Anspruch 7, wobei der Abstand zwischen den zweiten Abschnitten des Paares Schultern (9) weniger als 30% des Abstandes zwischen den ersten Abschnitten des Paares Schultern (9) beträgt.

9. Gerät nach einem der Ansprüche 6 bis 8, wobei ein jeder Reifen (8) aus Gummi hergestellt ist.

10. Gerät nach einem der Ansprüche 6 bis 9, wobei ein jeder Reifen (8) unter Druck steht, vorzugsweise bei einem Druck, der mindestens gleich einem atmosphärischen Druck ist.

11. Selbstfahrender Rasenmäherroboter, umfassend:
- einen Rahmen;
- Bewegungsmittel, die dem Rahmen zugeordnet sind, um ihn entlang einer Zuführbahn in einem Arbeitsbereich zu führen;
- Schneidmittel, die dem Rahmen zugeordnet und ausgelegt sind, um einen Schneidvorgang des Rasens durchzuführen, der entlang der Zuführbahn vorhanden ist;
wobei die Bewegungsmittel einen Motor und ein Paar von Geräten (1) nach einem der vorhergehenden Ansprüche umfassen, wobei zumindest die jeweiligen Haupträder (2) mit einem Kraftaufnehmer des Motors gekoppelt sind.

12. Bausatz zur Herstellung von Bewegungsmitteln eines selbstfahrenden Rasenmäherroboters, umfassend:
- eine Vielzahl an Hilfsrädern (3), die mit einem Hauptrad (2) der Bewegungsmittel eines selbstfahrenden Rasenmäherroboters nach Anspruch 11 gekoppelt werden können;
- Kopplungsmittel (4), die zum sicheren Befestigen mindestens eines Hilfsrads (3) am Hauptrad (2) so ausgelegt sind, dass das mindestens eine Hilfsrad (3) drehfest mit dem Hauptrad (2) verbunden ist;
**dadurch gekennzeichnet, dass** die Hilfsräder (3) und die Kopplungsmittel (4) eines oder mehrere der technischen Merkmale nach den Ansprüchen 1 bis 10 umfassen.

## Revendications

1. Dispositif de déplacement (1) pour robots-tondeuses autopropulsés, comprenant :
- une roue principale (2) pouvant être couplée à une prise de puissance d'un moteur ;
- au moins une roue auxiliaire (3) pouvant être couplée à la roue principale (2) pour recevoir de ladite roue principale (2) une puissance mécanique ;
- des moyens d'accouplement (4) configurés pour fixer solidement l'au moins une roue auxiliaire (3) à ladite roue principale (2), de telle sorte que l'au moins une roue auxiliaire (3) soit solidaire en rotation de la roue principale (2) ;
comprenant au moins une roue motrice (6), comportant un corps principal (6a) essentiellement circulaire et une pluralité de doigts d'entraînement (6b) se prolongeant radialement en s'éloignant dudit corps principal (6a), **caractérisé en ce qu'**il comprend un élément de protection (5) pouvant être couplé à une surface latérale d'une roue auxiliaire (3) ou de la roue principale (2) faisant face directement à une zone de travail du robot-tondeuse, de manière à couvrir au moins partiellement ladite surface.

2. Dispositif selon la revendication 1, dans lequel les moyens d'accouplement (4) sont applicables à une partie périphérique de l'au moins une roue auxiliaire (3) et de l'au moins une roue principale (2).

3. Dispositif selon la revendication 1 ou 2, dans lequel la roue principale (2) et la roue auxiliaire (3) comportent une pluralité de sièges traversants filetés intérieurement et positionnés de telle manière que chaque siège traversant de la roue principale (2) peut faire face à un siège traversant respectif de la roue auxiliaire (3), de préférence lesdits moyens de couplage (4) comprennent une pluralité de vis pouvant être vissées dans lesdits sièges traversants.

4. Dispositif selon l'une quelconque des revendications précédentes, dans lequel l'au moins une roue motrice (6) est configurée pour être interposée entre la roue principale (2) et une roue auxiliaire (3) adjacente à ladite roue principale (2) ou entre des roues auxiliaires adjacentes (3).

5. Dispositif selon l'une quelconque des revendications précédentes, dans lequel lesdits doigts d'entraînement (6b) sont disposés de manière circonférentielle et équidistante les uns par rapport aux autres autour du corps principal (6a).

6. Dispositif selon l'une quelconque des revendications précédentes, dans lequel la roue principale (2) et chaque roue auxiliaire (3) comprennent une jante (7) et un pneu (8), ledit pneu (8) comprenant :
- une partie annulaire extérieure (8a) définissant une bande de roulement (8) et ayant une section dans un plan radial se prolongeant principalement le long d'une direction essentiellement parallèle à un axe de rotation (X) du pneu (8) ;
- une partie annulaire intérieure (8b) configurée pour coupler le pneu (8) à la jante (7) et positionnée en correspondance d'un plan médian de la partie annulaire extérieure (8a), ladite partie annulaire intérieure (8b) ayant une section dans un plan radial se prolongeant principalement le long d'une direction essentiellement perpendiculaire audit axe de rotation (X) du pneu (8).

7. Dispositif selon la revendication 6, dans lequel le pneu (8) comporte une paire d'épaulements (9), chacun desdits épaulements (9) ayant une section transversale essentiellement en forme de « S », ladite section transversale comprenant :
- une première partie (9a) essentiellement perpendiculaire à l'axe de rotation (X) du pneu (8) et conçue pour délimiter latéralement la partie annulaire extérieure (8a) ;
- une deuxième partie (9b) essentiellement perpendiculaire à l'axe de rotation (X) du pneu (8) et conçue pour délimiter latéralement la partie annulaire intérieure (8b) ;
- une troisième partie (9c) essentiellement parallèle à l'axe de rotation (X) du pneu (8) et conçue pour joindre la première partie (9a) à la deuxième partie (9b).

8. Dispositif selon la revendication 7, dans lequel la distance entre les deuxièmes parties de la paire d'épaulements (9) est inférieure de 30 % à la distance entre les premières parties de la paire d'épaulements (9) .

9. Dispositif selon l'une quelconque des revendications 6 à 8, dans lequel chaque pneu (8) est en caoutchouc.

10. Dispositif selon l'une quelconque des revendications 6 à 9, dans lequel chaque pneu (8) est mis sous pression, de préférence à une pression au moins égale à une pression atmosphérique.

11. Robot-tondeuse autopropulsé, comprenant :
- un châssis ;
- des moyens de déplacement associés au châssis pour le guider le long d'une trajectoire d'alimentation dans une zone de travail ;
- des moyens de coupe associés au châssis et configurés pour effectuer une opération de coupe du gazon présent le long de la trajectoire d'alimentation ;
dans lequel lesdits moyens de déplacement comprennent un moteur et une paire de dispositifs (1) selon l'une quelconque des revendications précédentes, dans lequel au moins les roues principales (2) respectives sont couplées à une prise de puissance du moteur.

12. Kit pour la préparation des moyens de déplacement d'un robot-tondeuse autopropulsé, comprenant :
- une pluralité de roues auxiliaires (3) pouvant être couplées à une roue principale (2) des moyens de déplacement d'un robot-tondeuse autopropulsé selon la revendication 11 ;
- des moyens d'accouplement (4) configurés pour fixer solidement au moins une roue auxiliaire (3) à ladite roue principale (2), de telle sorte que l'au moins une roue auxiliaire (3) est solidaire en rotation de la roue principale (2) ;
**caractérisé en ce que** lesdites roues auxiliaires (3) et lesdits moyens d'accouplement (4) comprennent une ou plusieurs des caractéristiques techniques selon les revendications 1 à 10.
